# EUROPEAN PATENT APPLICATION

(11) **EP 4 629 071 A1**
(43) Date of publication of application: **08.10.2025**
(21) Application number: 23884802.2
(22) Date of filing: 30.10.2023
(51) Int. Cl.: G06F 9/455

(54) **WORKING METHOD OF VIRTUAL TERMINAL**

(30) Priority: 30.10.2022 CN 202211340929
(71) Applicant: Zhou, Xingchang, Huaian, Jiangsu 223323 (CN)
(72) Inventor: Zhou, Xingchang, Huaian, Jiangsu 223323 (CN)
(74) Representative: Loo, Chi Ching
(86) International application number: PCT/CN2023/127563
(87) International publication number: WO 2024/093870

(57) **Abstract**

The present invention discloses a working method of a virtual terminal, wherein during the process of sending data from a virtual machine to a thin client, data is transmitted without using a network protocol in one section, thereby ensuring data security.

## Description

### TECHNICAL FIELD

The present invention relates to a working method of a virtual terminal, belonging to the field of computer networks.

### Background technology

Many units now use virtual machines to transmit virtual terminals' desktops using differential signaling, achieving security.

### summary of the invention

### technical problem

Due to the short distance of differential signal transmission used by the extender, it cannot meet the requirements of users.

### Solution to the problem

### Solution

The purpose of the present invention is to address the aforementioned issues by inventing a method for operating a virtual terminal, wherein a computer runs at least one virtual terminal; Each virtual terminal corresponds to an input/output port of a set of virtual terminal input/output devices, each set of input/output ports including a video output port, a mouse input port, and a keyboard input port;
Input/output devices for virtual terminal: receive the desktop of the virtual terminal from a computer or network, and then send the desktop of the virtual terminal unidirectionally through a video output port; Receive mouse and keyboard signals from the mouse and keyboard signal receiving ports, and then send the mouse and keyboard signals to the computer. The input/output device for virtual terminal cannot (not) send data packets to the thin client signal relay device, and the input/output device for virtual terminal is used to send the desktop of virtual terminal to the thin client signal relay device.

Thin client signal relay device: Unidirectional receive the virtual terminal desktop from video input port, and then sending virtual terminal desktop to thin client; Receive mouse and keyboard signals from the thin client, and then send them out through the mouse and keyboard signal sending port.

The video signal input port of the thin client signal relay device is connected to the video signal output port of the input/output device for virtual terminal through a video cable. Commonly used video cables are copper wire, VGA cable, or other similar video cables. Since this video cable does not transmit data packets during video transmission, it prevents the possibility of data leakage.

The input/output device for virtual terminal sends video and audio signals unidirectionally to the signal relay device of the thin client, without using network protocols such as TCP/IP and telnet during the video transmission process.

The video output port, mouse signal input port, and keyboard signal input port of the input/output device for virtual terminal correspond to the video input port, mouse signal output port, and keyboard signal output port connected to the thin client signal relay device, respectively; The video input port, mouse signal output port, and keyboard signal output port of the thin client signal relay device are a set of input and output ports.

The input/output device of a virtual terminal has at least one set of input/output ports, and each set of input/output ports connected to the virtual terminal includes a video output port, a mouse input port, and a keyboard input port.

### The beneficial effects of invention

### beneficial effects

1) The virtual machine in the computer cannot be connected to external thin client terminals using TCP/IP or similar protocols, and there is a line in between that does not transfer files, ensuring the security of files in the virtual machine.
2) Thin clients can be deployed remotely.
3) You can safely use the local area network in different locations.

### Attached image description

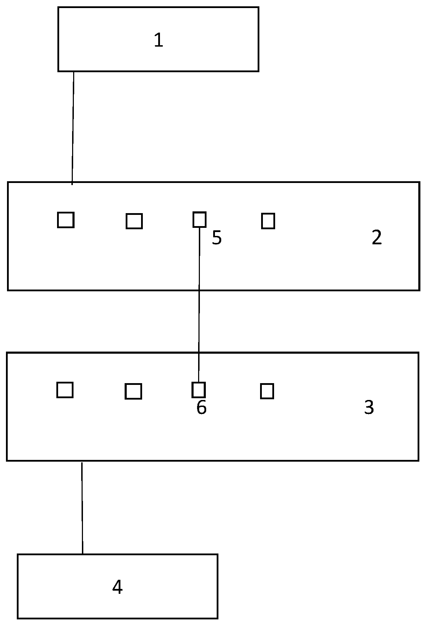

Figure 1 is a network architecture diagram described in embodiment 1 of the present invention.

In the figure, 1 is a computer, 2 is an input/output device for a virtual terminal, 3 is a thin client signal relay device, 4 is a thin client, 5 is a set of input/output ports for the input/output device for virtual terminal, and 6 is a set of input/output ports for the thin client signal relay device.

### Invention embodiments

### Embodiment

### Referring to Figure 1,

Input/output device 2 of virtual terminal: There is at least one set of input/output ports. The virtual machine sends the desktop to the corresponding input/output port and receives mouse and keyboard signals from the input/output port; Optionally, the virtual machine sends audio signals to the corresponding input/output ports; The input/output device for virtual terminal cannot (does not) send data packets to the thin client signal relay device, and the input/output device for virtual terminal is used to send the desktop of the virtual terminal to the thin client signal relay device.

Thin client signal relay device 3: There is at least one set of input and output ports, and each set of input and output ports corresponds to the thin client. The thin client sends mouse and keyboard signals to the corresponding input and output ports, and receives virtual machine desktop video signals from the input and output ports;
Optionally, the thin client receives audio signals from the corresponding input/output ports;
The thin client signal relay device 3 receives video signals from the input/output device 2 of the virtual terminal. The data cable connecting the thin client signal relay device 3 and the input/output device 2 of the virtual terminal is preferably a VGA cable or a similar video cable that cannot transfer files;
The thin client signal relay device 3 sends mouse and keyboard signals to the input/output device 2 of the virtual terminal, and the best way to send signals is one-way.

Input/output port 5 of the switching module: It is a set of input/output ports, including one video output port, one mouse signal input port, and one keyboard signal input port. The mouse signal input port and keyboard signal input port can be the same input port; Optionally, port 5 of the switching module can also have an audio input port;
The input/output port 6 of the thin client signal relay device includes one video output port, one mouse signal input port, and one keyboard signal input port. The mouse signal input port and keyboard signal input port can be the same input port; Optionally, port 6 of the thin client signal relay device can also have an audio input port;

### Implementation of the present invention

Step 1: The computer sends the desktop of the virtual terminal to port 5 of input/output device 2 of the virtual terminal;
Step 2: Input/output device 2 of the virtual terminal sends the desktop of the virtual terminal to port 6 of signal relay device 3 of the thin client through port 5;
Step 3: Send the virtual terminal desktop to thin client 4 through port 6 of thin client signal relay device 3;
Step 4: Thin client 4 sends mouse and keyboard signals to port 6 of thin client signal relay device 3;
Step 5: Port 6 of the thin client signal relay device 3 sends mouse and keyboard signals to port 5 of the input/output device 2 of the virtual terminal;
Step 6: Send mouse and keyboard signals unidirectionally to the virtual machine through port 5 of input/output device 2 of the virtual terminal.

### Best embodiment of the present invention

Due to the inability of VGA to transmit video signals and data files, remote thin clients cannot copy data from the computer host to the terminal, effectively protecting data security.

The virtual terminal includes:
A multi type virtual terminal that allows multiple people to use a PC simultaneously and independently, with each user having their own monitor, keyboard, and mouse. Users can simultaneously share the hardware, software, and peripheral resources of a PC computer;
Various virtual machines or containers.

Virtual terminal X is any of the aforementioned virtual terminals.

### Work steps:

Create a virtual terminal X on the computer;
The computer forms a corresponding relationship between the virtual terminal and port 5 of the input/output device 2 of the virtual terminal;
The computer sends the desktop and audio of the virtual terminal to port 5 of input/output device 2 of the virtual terminal;
The input/output device 2 of the virtual terminal sends the desktop and audio of the virtual terminal to port 6 of the thin client signal relay device 3 through port 5;
The port 6 of the thin client signal relay device 3 corresponds to the thin client 4;

Port 6 of the thin client signal relay device 3 sends the desktop and audio of the virtual terminal to thin client 4; The thin client sends video signals to the display screen and audio signals to the audio equipment.
Thin client machine 4 receives signals from the mouse and keyboard, and sends the mouse, keyboard signals, and audio signals to port 6 of thin client machine signal relay device 3;
Port 6 of the thin client signal relay device 3 sends mouse, keyboard signals, and audio to port 5 of the input/output device 2 of the virtual terminal;
Port 5 of input/output device 2 of the virtual terminal sends mouse, keyboard signals, and audio to the virtual machine;
The virtual machine receives mouse and keyboard signals, audio, and performs corresponding operations.

The terminal of the thin client and the signal relay device of the thin client can be located in the same place or in different places. If they are in the same place, the two devices transmit digital signals, which can be transmitted over long distances, making it easy to deploy a large local area network.

The above description is only a preferred embodiment of the present invention and is not intended to limit the present invention. Any modifications, equivalent substitutions, and improvements made within the spirit and principles of the present invention should be included within the scope of protection of the present invention.

In many companies, employees are not allowed to use audio to communicate information. In steps 2 to 8 above, there are no audio input/output ports and no audio signal processing.
Preferred: The input/output device for virtual terminal receives the desktop of the virtual terminal from the computer,
The input/output device for virtual terminal sends the desktop of the virtual terminal to the thin client signal relay device in a unidirectional transmission manner;
The thin client signal relay device sends the desktop of the virtual terminal to the thin client. Preferred: The input/output device for virtual terminal sends audio to the thin client signal relay device in a unidirectional transmission manner.

Preferred: The thin client signal relay device unidirectionally receives mouse and keyboard signals sent by the thin client, while the thin client signal relay device unidirectionally receives mouse and keyboard signals sent by the thin client; Alternatively, the thin client signal relay device sends mouse and keyboard signals unidirectionally to the input/output devices of the virtual terminal; Alternatively, the input/output device for virtual terminal sends mouse and keyboard signals unidirectionally to the virtual terminal.
Preferred: The thin client sends mouse and keyboard signals to the signal relay device of the thin client;

The thin client signal relay device sends mouse and keyboard signals to the input and output devices of the virtual terminal;
The input/output device for virtual terminal sends mouse and keyboard signals to the virtual terminal.

Preferred: The computer is connected to the input/output device for virtual terminal, and the video output port of the input/output device for virtual terminal is connected to the video input port of the thin client signal relay device. The input port of the input/output device for virtual terminal is connected to the mouse and keyboard signal output ports of the thin client signal relay device, and the thin client signal relay device is connected to the thin client.

### Application example:

A company has a data center in X city, with one server running multiple virtual machines G. Employee M of subsidiary B is assigned one virtual machine; Subsidiary B is located in Y city;
Employee M remotely logs into virtual machine G through a thin client and is working normally;
Employee M cannot copy files from virtual machine G or server, ensuring data security.

## Claims

1. A working method for virtual terminal, **characterized by** comprising:
Input/output device for virtual terminal receives desktop of the virtual terminal from computer;
The input/output device for virtual terminal cannot send data packet to thin client signal relay device, and the input/output device for virtual terminal send the desktop of virtual terminal to thin client signal relay device;
The thin client signal relay device send the desktop of the virtual terminal to the thin client.

2. The working method of the virtual terminal according to claim 1, **characterized in that**:
The input/output device for virtual terminal send audio to the thin client signal relay device in a unidirectional transmission manner.

3. The working method of the virtual terminal according to claim 1, **characterized in that**: the thin client send mouse and keyboard signals to the thin client signal relay device;
The thin client signal relay device send mouse and keyboard signals to the input and output devices of the virtual terminal; The input/output device for virtual terminal send mouse and keyboard signals to the virtual terminal.

4. The working method of virtual terminal according to claim 1 or 3, **characterized in that**: the thin client signal relay device unidirectionally receives mouse and keyboard signals sent by the thin client; Alternatively, the thin client signal relay device unidirectionally send mouse and keyboard signals to the input/output devices of the virtual terminal; Alternatively, the input/output device for virtual terminal send mouse and keyboard signals unidirectionally to the virtual terminal.

5. A structure using the working method of transmitting virtual terminals as claimed in any one of claims 1, 3, and 4, comprising: a computer, an input/output device for virtual terminal, a thin client signal relay device, and a thin client, **characterized in that**: A computer is connected to an input/output device of virtual terminal, and the video output port of the input/output device of the virtual terminal is connected to the video input port of a thin client signal relay device. The input port of the input/output device of the virtual terminal is connected to the mouse and keyboard signal output ports of the thin client signal relay device, and the thin client signal relay device is connected to the thin client.
